# EUROPÄISCHE PATENTSCHRIFT

(11) **EP 2 305 372 B1**
(45) Veröffentlichungstag und Bekanntmachung des Hinweises auf die Patenterteilung: **11.05.2016**
(21) Anmeldenummer: 10178825.5
(22) Anmeldetag: 23.09.2010
(51) Int. Cl.: B01J 2/06

(54) **Vorrichtung und Verfahren zum Pelletieren oder Granulieren eines flüssigen oder pastösen Stoffes**
Device and method for pelletising or granulating a fluid or paste material
Dispositif et procédé de pelletisation ou de granulation d'une matière liquide ou pâteuse

(30) Priorität: 05.10.2009 DE 102009048321
(43) Veröffentlichungstag der Anmeldung: 06.04.2011
(73) Patentinhaber: Messer Group GmbH, 65812 Bad Soden (DE); Messer Austria GmbH, 2352 Gumpoldskirchen (AT)
(72) Erfinder: Gockel, Frank, 77410 Charny (FR); Kosock, Stefan, 47805 Krefeld (DE); Laimer, Walter, 7210 Mattersburg (AT); Lammertz, Monika, 47807 Krefeld (DE); Moser, Friedrich, 47167 Duisburg (DE)
(74) Vertreter: Münzel, Joachim R.

(56) Entgegenhaltungen:
- EP-A1- 1 160 006
- WO-A2-03/028486
- DE-A1- 19 506 540
- US-A- 3 228 838

## Beschreibung

Die Erfindung betrifft eine Vorrichtung zum Pelletieren oder Granulieren eines flüssigen oder pastösen Stoffes mit einem flüssigen Kühlmittel, mit einer Fördereinrichtung, mittels der das flüssige Kühlmittel in eine zumindest abschnittsweise nach oben offene Rinnenanordnung transportiert wird, einer Eintragvorrichtung, mittels der der zu pelletierende Stoff in die Rinnenanordnung eingetragen wird und einer Trenneinrichtung zum Trennen des pelletierten oder granulierten Stoffes vom Kühlmittel. Die Erfindung betrifft des Weiteren ein entsprechendes Verfahren.

Ein Verfahren und eine Vorrichtung dieser Art ist aus der US 4,655,047 bekannt. Gefrorene Pellets eines flüssigen Lebensmittels, beispielsweise Flüssigei, werden erzeugt, indem das Lebensmittel durch eine Düse oder eine Mehrzahl an Düsen in dem Flüssigkeitsstrom eines kryogenen Mediums eingetropft wird, das über eine schräge Wanne läuft. Im Strom des kryogenen Mediums gefrieren die Tropfen des flüssigen Lebensmittels und die so erzeugten Pellets (Stoffkörner) werden anschließend mittels eines Rüttelsiebs vom kryogenen Medium getrennt. Das kryogene Medium wird zurückgeführt und steht erneut dem Kühlprozess zur Verfügung, während die Pellets über das Sieb in einen Sammelbehälter befördert werden. Problematisch bei diesem Gegenstand ist, dass die Fließmittelstrecke relativ groß bemessen sein muss, um eine hinreichende Verweilzeit und eine hinreichende Durchkühlung des flüssigen Lebensmittels im kryogenen Medium zu erreichen. Zudem ist der Einsatz des Rüttelsiebes bei den tiefen Temperaturen des kryogenen Mediums von bis zu -196°C nicht unproblematisch.

Um dem Problem der langen Kühlstrecke zu begegnen wird in der EP 0 919 279 B1 vorgeschlagen, einer rinnenförmigen Kühlstrecke, in der der zu pelletierende Stoff mittels eines flüssigen kryogenen Mediums angefroren wird, eine weitere Förderstrecke in Gestalt eines in einen Tunnel eingehausten Förderbandes nachzuschalten, in welchem zum einen die erzeugten Pellets vom flüssigen Kühlmedium getrennt werden und zum anderen eine weitere Kühlung der Pellets durch ein gasförmiges Kühlmittel erfolgt. Die Pellets werden erst in der Förderstrecke vollständig durchgefroren, wodurch die Rinnenanordnung für das flüssige kryogene Medium relativ kurz gehalten werden kann. Nachteilig bei diesem Gegenstand ist, dass die Verwendung eines Förderbandes als Trenneinrichtung einen hohen Wartungsaufwand mit sich bringt, da ein Förderband nur schwer zu reinigen und zu sterilisieren ist.

Um der Problematik des Einsatzes beweglicher Teile bei der Temperatur des flüssigen Stickstoffs zu umgehen wird in der DE 100 12 551 A1 vorgeschlagen, die vollständig durchgefrorenen Pellets nach ihrer Herstellung in einer mit Flüssigstickstoff gefüllten Wanne einer um einen bestimmten Winkel geneigten Rinne zuzuführen, in der die Pellets nur zu einem Teil vom flüssigen Stickstoff bedeckt sind. Die Pellets treiben im Strom des Flüssigstickstoffs bis zum Ende der Rinne und werden aufgrund der Neigung der Rinne beschleunigt. Am Ende der Rinne überwinden sie eine gewisse freie Flugstrecke, um anschließend von einer zweiten, horizontal von der ersten Rinne beabstandeten Rinne aufgefangen zu werden. Aufgrund von Adhäsionskräften vermag der Flüssigstickstoff den Pellets nicht zu folgen und wird zwischen den beiden Rinnen in einem Behälter aufgefangen, wodurch eine Trennung von Pellets und Stickstoff erfolgen soll.

Die zuvor beschriebenen Gegenstände weisen den Nachteil auf, dass die in der Regel fest installierte Kühlrinne zu einer fest definierten Verweilzeit des Produkts im flüssigen Kühlmittel führt. In einigen Bereichen, wie beispielsweise in der Biotechnologie oder der Pharmazie, werden jedoch zunehmend flexible Anforderungen an die zu erbringende Kühlleistung gestellt. So sollen in einer Apparatur unterschiedliche Stoffe mit unterschiedlichen physikalischen oder chemischen Eigenschaften und demzufolge mit einem unterschiedlichen Gefrierverhalten gekühlt werden. Dies führt bei den Vorrichtungen nach dem Stande der Technik zwangsläufig dazu, dass nicht alle zur Kühlung vorgesehenen Produkte gleich gut gekühlt werden können.

Aus der EP 1 160 006 A1 ist eine Vorrichtung sowie ein Verfahren zum Pelletieren einer flüssigen oder pastösen Masse bekannt, bei dem die zu gefrierenden Pellets zunächst im Kühlmittelstrom einen für Kühlmittel und Pellets gleichermaßen undurchlässigen Rinnenabschnitt durchlaufen. An diesen Rinnenabschnitt schließt sich strömungstechnisch ein weiterer Rinnenabschnitt an, der für Pellets undurchlässig, für den als Kühlmittel eingesetzten flüssigen Stickstoff jedoch durchlässig ist und in dem die Pellets vom Kühlmittel getrennt werden. Die Anordnung ist dabei so aufgebaut, dass Rinnenabschnitte mit jeweils verschiedenen Länge und Neigung miteinander verbunden werden können, um so unterschiedlichen Kühlaufgaben gerecht werden zu können Auch dieser Gegenstand weist jedoch hinsichtlich der Anpassbarkeit an unterschiedliche Anforderungen noch Verbesserungsbedarf auf.

Der Erfindung liegt die Aufgabe zugrunde, eine Vorrichtung zur Herstellung von Pellets mittels eines kryogenen Mediums bereitzustellen, die leicht zu handhaben und zu warten ist.

Gelöst ist diese Aufgabe bei einer Vorrichtung der eingangs genannten Art und Zweckbestimmung dadurch, dass die Rinnenanordnung einen nach unten geschlossenen rinnenförmigen Fixierabschnitt sowie einen sich an den Fixierabschnitt unmittelbar anschließenden rinnenförmigen Trennabschnitt umfasst, der unterseitig mit einem Durchlassbereich ausgerüstet ist, der für das flüssige Kühlmittel durchlässig, für den pelletierten oder granulierten Stoff jedoch undurchlässig ist.

Bei der erfindungsgemäßen Vorrichtung wird das zu pelletierende Produkt beispielsweise in einen laminaren Strom des flüssigen Kühlmittels an einer Stelle stromabwärts von der das Kühlmittel in die Rinnenanordnung einträgenden Fördereinrichtung eingetragen, beispielsweise eingetropft. Bei der Fördereinrichtung handelt es sich beispielsweise um eine Pumpe, ein Bechersystem oder eine archimedische Schraube. Dabei sollte dafür Sorge getragen werden, dass die Strömung an der Eintragsstelle laminar ist. Der Eintrag des in der Regel flüssigen oder pastösen Stoffes erfolgt beispielsweise so, wie in US 4 655 047 B1 beschrieben, worauf hiermit Bezug genommen wird. Die Rinnenanordnung umfasst einen im Kontext der Erfindung als "Fixierabschnitt" bezeichneten Abschnitt in Form einer nach unten (im geodätischen Sinne) geschlossenen Rinne, in dem die eingebrachten Tropfen des Produkts teilweise oder vollständig von einem Strom des flüssigen Kühlmittels umspült werden. Die Länge des Fixierabschnitts ist je nach Produkt so zu wählen, dass zumindest die äußere Hülle der Produkttropfen gefroren und damit die in der Regel kugelige Form des eingetragenen Stoffes als Pellets(Stoffkörner) fixiert wird. Unmittelbar an den Fixierabschnitt schließt sich ein im Kontext der Erfindung als "Trennabschnitt" der Rinnenanordnung bezeichneter Abschnitt an, in dem die erzeugten Pellets vom flüssigen Kühlmittel getrennt werden. Dazu ist der Trennabschnitt im Gegensatz zum Fixierabschnitt nicht als eine nach unten geschlossene Rinne ausgebildet, sondern weist einen Durchlassbereich mit geeigneten Öffnungen auf, die für das Kühlmittel, nicht aber für die erzeugten Pellets durchlässig sind. Der Trennabschnitt schließt sich unmittelbar an den Fixierabschnitt an, ohne dass die Pellets bei ihrem Transport vom einen zum anderen Abschnitt eine Flug- oder Fallstrecke zu überwinden haben. Zwischen den beiden Abschnitten ist sowohl eine starre als auch eine gelenkige Verbindung möglich; zweckmäßig ist es, dass der Trennabschnitt in einem stärkeren Winkel gegenüber der Horizontalen abfällt (in Transportrichtung der Pellets gesehen) als der Fixierabschnitt, um einen zuverlässigen Transport der Pellets auch im Trennabschnitt zu erreichen. Da der Trennabschnitt von einer kalten Atmosphäre verdampften Kühlmittels umströmt wird, findet auf dem Trennabschnitt zugleich eine weitere Kühlung des Produkts statt, die idealerweise zu einer völligen Durchkühlung der Pellets führt. Die erfindungsgemäße Vorrichtung kommt ohne wartungsanfällige und aufwändige bewegliche Teile aus und kann durch Austausch der Rinnen einfach und flexibel an unterschiedliche Anforderungen angepasst werden.

Der Fixierabschnitt und/oder der Trennabschnitt ist/sind jeweils in einem verstellbaren Winkel gegenüber der Horizontalen geneigt angeordnet. Durch Einstellung der jeweiligen Winkel kann die Fließgeschwindigkeit des Kühlmittels bzw. der Pellets verändert werden und somit dem jeweiligen Stoff angepasst werden:
Gefriert beispielsweise der Stoff im Kontakt mit dem flüssigen Kühlmittel rasch durch, kann eine steiler abfallende Neigung gewählt werden, wodurch sich die Geschwindigkeit des durch den Fixierabschnitt bzw. den Trennabschnitt geführten Kältemittels bzw. Stoffs erhöht und damit ein höherer Durchsatz erzielt werden kann. Neigen die erzeugten Pellets dazu, an der Rinnenanordnung anzuhaften, empfiehlt es sich, zumindest den Trennabschnitt sehr steil abfallen zu lassen, um die Wirkung der Schwerkraft auf die Pellets zu erhöhen. Entsprechend können flacher abfallende Neigungen gewählt werden, wenn der zu pelletierende Stoff eine geringe Wärmeleitfähigkeit aufweist und daher eine größere Zeitdauer erforderlich ist, um das Gefrieren eines für den zuverlässigen Weitertransport hinreichend breiten Randes der Pellets zu gewährleisten.

Um eine noch größere Flexibilität der erfindungsgemäßen Vorrichtung zu erreichen, ist/sind der Fixierabschnitt und/oder der Trennabschnitt jeweils aus mehreren, in ihrem Neigungswinkel gegenüber der Horizontalen einstellbaren Segmenten aufgebaut. Die vorzugsweise miteinander verbundenen, z.B. fixierbar aneinander angelenkten Segmente des Abschnitts bilden also eine Rinne, in deren Verlauf jeweils unterschiedliche Neigungswinkel auftreten können.

Die Rinnenanordnung umfasst eine zumindest abschnittsweise für das Kühlmittel durchlässige erste Rinne sowie eine geodätisch unterhalb der ersten Rinne angeordnete, für das flüssige Kühlmittel undurchlässige zweite Rinne, welche zumindest abschnittsweise unter Ausbildung des Fixierabschnitts derart an der ersten Rinne anliegt, dass beim bestimmungsgemäßen Einsatz der Vorrichtung die eingetropften Flüssigkeitsteilchen des zu pelletierenden Stoffes innerhalb diesem Abschnitts in der ersten Rinne von einem Strom aus flüssigen Kühlmittel umgeben oder sogar bedeckt sind. Die zweite Rinne ist aus beweglichen Segmenten aufgebaut, die jeweils von einem ersten Zustand, in dem das Segment an der ersten Rinne flüssigkeitsdicht anliegt, in einen zweiten Zustand verbringbar ist, in dem das Segment beabstandet von der ersten Rinne angeordnet ist. Auf diese Weise kann die Länge des Fixierabschnittes dadurch variiert werden, dass eines oder mehrere der Segmente der zweiten Rinne an die erste Rinne angelegt werden. Durch die Beabstandung eines oder mehrerer Segmente der zweiten Rinne von der ersten Rinne kann wiederum die Länge des Trennabschnitts verändert werden. Die Segmente der zweiten Rinne können dabei unter Ausbildung einer insgesamt flüssigkeitsdichten Rinne miteinander verbunden, beispielsweise aneinander angelenkt sein, oder nach Art von Dachziegeln teilweise überlappend angeordnet sein.

Ergänzend oder alternativ dazu können die erste Rinne und die zweite Rinne axial zueinander verschiebbar angeordnet sein. Die erste Rinne ist dabei innerhalb der zweiten oder umgekehrt angeordnet und kann axial, also längs der Fließrichtung eines in der Rinne transportierten Stoffes/Kühlmittels, gegenüber der jeweils anderen Rinne bewegt werden. Auch dadurch lässt sich die Länge des Fixierabschnitts flexibel einstellen.

Vorteilhafterweise umfasst der Trennabschnitt zur Gewährleistung der Durchlässigkeit für das Kühlmittel zumindest einen gitter-, rillen- oder siebförmigen Durchlassbereich. Eine andere bevorzugte Ausgestaltung der ersten Rinnenanordnung sieht vor, dass der Trennabschnitt oder ein Abschnitt oder Segment des Trennabschnitts als Lochblech ausgebildet ist. Die Öffnungen des Gitters oder des Siebes oder die Löcher des Lochbleches sind den Anforderungen entsprechend zu bemessen, insbesondere sollte einerseits ein hinreichender Durchfluss des flüssigen Kühlmittels gewährleistet sein, sodass das Kühlmittel am (in Bewegungsrichtung der Pellets gesehen) Ende des Trennabschnitts vollständig abgeflossen ist, andererseits sollten die Öffnungsdurchmesser im Durchlassbereich wesentlich kleiner als die mittlere Durchmesser der erzeugten Pellets sein, um den Weitertransport der Pellets zu gewährleisten.

Eine abermals vorteilhafte Weiterbildung der Erfindung sieht vor, dass die Rinnenanordnung als eine sich um eine im Wesentlichen vertikale Achse windende Spirale ausgebildet ist. Die Rinnen bzw. Segmente der Rinnen verlaufen also auf einer - von der Eintragseinrichtung aus betrachtet - nach unten verlaufenden Spirale. Auch bei dieser Ausgestaltung können Strecken unterschiedlichen Gefälles durch entsprechende Anstellung von Rinnensegmenten realisiert werden. Diese Ausgestaltung ist besonders raumsparend.

Das flüssige Kühlmittel ist vorzugsweise eine kryogene Flüssigkeit, wie etwa ein kälteverflüssigtes Gas, insbesondere kälteverflüssigter Stickstoff (LN₂). Als gasförmiges Kühlmittel für die Kühlung der Pellets im Bereich des Trennabschnitts der Rinnenanordnung kommt beispielsweise kalter gasförmiger Stickstoff mit einer Temperatur von bevorzugt unter minus 150°C zum Einsatz. Beispielsweise handelt es sich dabei um verdampftes flüssiges Kühlmittel. Der zu pelletierende Stoff ist in der Regel flüssig oder pastös. Beispiele sind flüssige oder pastöse Zubereitungen für die Herstellung von Eiskrem oder anderer Lebensmittel, pharmazeutische und chemische Produkte sowie Hilfs- und Zusatzstoffe.

Bevorzugt sind Pelletiervorrichtung und Rinnenanordnung mit einer Wärmeisolierung ausgerüstet, die zweckmäßigerweise eine Einheit bilden, z. B. durch ein einheitliches oder zusammenhängendes wärmeisoliertes Gehäuse. Die Vorrichtung ist dabei bevorzugt nicht nur im Einsatzbereich des flüssigen Kühlmittels (Kühlmittelvorratsbehälter, Fixierabschnitt), sondern auch im Bereich des Trennabschnitts der Rinnenanordnung thermisch isoliert. Durch eine bevorzugte tunnelartige, wärmeisolierende Einhausung der Rinnenanordnung im Bereich des Trennabschnitts wird ein Gaskanal gebildet, durch den das gasförmige Kühlmittel geleitet wird. Durch eine Variation des Querschnitts des Gaskanals wird die Geschwindigkeit des Gasstromes des gasförmigen Kühlmittels im Gaskanal beeinflusst, wobei eine hohe Geschwindigkeit des Gasstromes für die weitere Kühlung und Durchfrostung der Pellets vorteilhaft ist.

Zweckmäßigerweise ist zumindest der Trennabschnitt mit einer Einrichtung zum Ablösen von an der Rinnenanordnung festfrierenden Pellets ausgerüstet. Dabei handelt es sich beispielsweise um ein Gebläse, dass mittels eines aus einem Inertgas, etwa gasförmigem Stickstoff oder einem Edelgas bestehenden Gasstroms etwaig an der Rinnenanordnung anhaftende Pellets ablöst, oder ein Hammerwerk oder eine Vibrationseinrichtung, die das weitere Anhaften der Pellets an die Rinne während des Betriebs der erfindungsgemäßen Vorrichtung unterbinden und bereits angehaftete Pellets ablöst.

Als vorteilhafte Fördereinrichtung kommt eine Pumpe, ein Becherwerk, eine archimedische Schraube oder eine Kombination dieser Fördereinrichtungen zum Einsatz.

Die Aufgabe der Erfindung wird auch mit einem Verfahren zum Pelletieren oder Granulieren eines flüssigen oder pastösen Stoffes gelöst, bei dem ein flüssiges Kühlmittel mit einer Fördereinrichtung in eine nach oben offene Rinnenanordnung transportiert wird, ein zu pelletierender Stoff in die Rinnenanordnung eingetragen wird und anschließend in einer Trenneinrichtung der pelletierte oder granulierte Stoffes vom Kühlmittel getrennt wird, und das dadurch gekennzeichnet ist, dass der zu pelletierende Stoff in der Rinnenanordnung im Strom des Kühlmittels einen nach unten geschlossenen rinnenförmigen Fixierabschnitt durchläuft und dabei durch Wärmekontakt mit dem Kühlmittel zu Pellets oder Körnern gefriert, und die Pellets oder Körner anschließend einem in Fließrichtung abwärts verlaufenden, rinnenförmigen Trennabschnitt zugeführt werden, der unterseitig mit einem Durchlassbereich ausgerüstet ist, wobei das Kühlmittel durch den Durchlassbereich hindurch abfließt, wohingegen die Pellets oder Körner unter der Wirkung der Schwerkraft den rinnenförmigen Trennabschnitt durchlaufen und in einer Auffangeinrichtung aufgefangen werden.

Die Länge und die Neigung des Fixierabschnitts und/oder des Trennabschnitts werden gegenüber der Horizontalen in Abhängigkeit von Parametern des zu pelletierenden Stoffs eingestellt. So werden Stoffe, die eine schlechte Wärmeleittfähigkeit aufweisen, einen langen Fixierabschnitt und/oder eine geringe Neigung des Fixierabschnitts erfordern. Stoffe, die dazu neigen, an den Rinnenanordnung haften zu bleiben erfordern gegenüber Stoffen, bei denen dies nicht der Fall ist, einen steiler abfallenden Trennabschnitt, damit ein problemloser Transport der Pellets unter der Wirkung der Schwerkraft gewährleistet ist.

Ausführungsbeispiele der Erfindung sollen im Folgenden anhand der Zeichnungen näher erläutert werden. In schematischen Ansichten zeigen:
Fig. 1: eine erfindungsgemäße Vorrichtung in einer ersten Ausführungsform,
Fig. 2: eine erfindungsgemäße Vorrichtung in einer zweiten Ausführungsform mit einer spiralförmigen Rinnenanordnung und
Fig. 3: den Ausschnitt einer im Bereich eines Trennabschnitts vorgesehenen Rinne in einer perspektivischen Ansicht von unten.

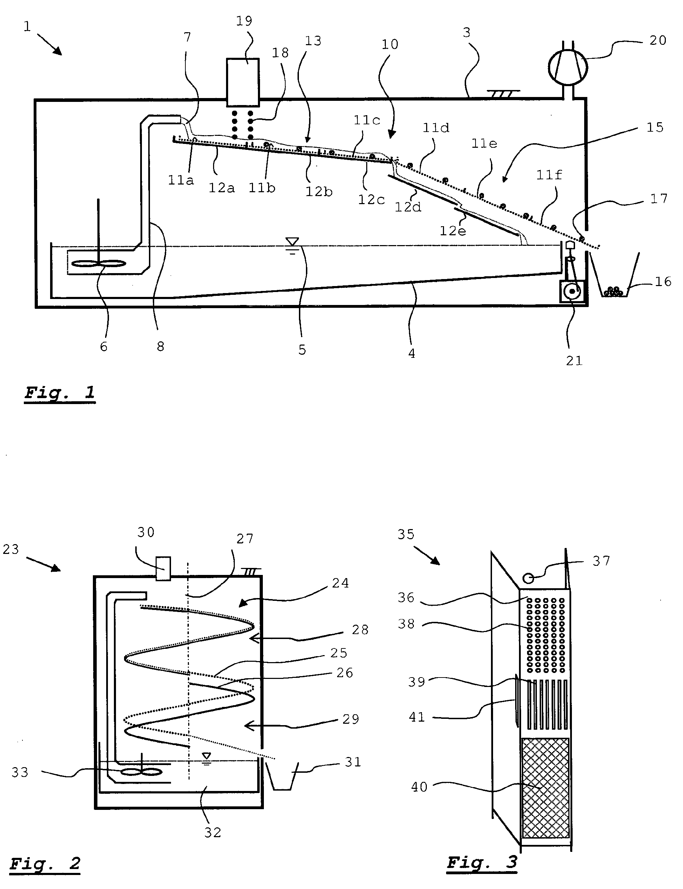

Die in Fig. 1 gezeigte Vorrichtung 1 zum Pelletieren von in der Regel flüssigen oder pastösen Stoffen umfasst einen in einem wärmeisolierten Gehäuse 3 aufgenommenen Vorratsbehälter 4 für ein tiefsiedendes, verflüssigtes Kältemittel, vorzugsweise Flüssigstickstoff, dessen Füllstand 5 in hier nicht gezeigter Weise mittels einer Füllstandsmessung kontrolliert und automatisch aus einem hier ebenfalls nicht gezeigten Vorratstank nachgefüllt wird. Mittels einer Fördereinrichtung 6 wird das verflüssigte, tiefsiedende Kältemittel 7 aus dem Vorratsbehälter 1 über eine Förderstrecke 8 einer Rinnenanordnung 10 zugeleitet. Die Rinnenanordnung 10 umfasst zwei jeweils nach (im geodätischen Sinne) oben offene Rinnen 11, 12, die (ebenfalls im geodätischen Sinne) übereinander angeordnet sind und jeweils in lösbar miteinander verbundene Segmente 11 a, 11 b, 11 c, 11 d, 11 e, 11 f; 12a, 12b, 12c, 12d, 12e unterteilt sind. Die Segmente 11 a, 11 b, 11 c, 11 d, 11 e, 11 f bzw. 12a, 12b, 12c, 12d, 12e einer jeden Rinne können unterschiedliche Neigungswinkel gegenüber der Horizontalen aufweisen. Die einzelnen Abschnitte 12a, 12b, 12c, 12d, 12e der Rinne 12 können manuell oder mittels geeigneter Motoren von einem Zustand, in dem sie dicht an der Rinne 11 bzw. einem Segment 11 a, 11 b, 11 c, 11 d, 11 e, 11 f der Rinne 11 anliegen in einen zweiten Zustand-verbracht werden, in dem sie vertikal beabstandet von der Rinne 11 vorliegen. Während die obere Rinne 11 auf ihrer Unterseite für das Kältemittel, nicht jedoch für die erzeugten Pellets durchlässig ist, sind die Segmente 12a, 12b, 12c, 12d, 12e der unteren Rinne 12 nach unten geschlossen und bilden zusammen eine im wesentlichen flüssigkeitsdichte Rinne 12.

Im Ausführungsbeispiel bilden die Segmente 11 a, 11 b und 11 c der oberen Rinne 11 eine (vom Zulauf des Kältemittels 7 aus gesehen) leicht schräg nach unten verlaufenden Rinnenabschnitt, im Folgenden als Fixierabschnitt 13 bezeichnet. Im Bereich dieses Fixierabschnitts 13 liegen die Segmente 12a, 12b, 12c der unteren Rinne 12 dicht an den entsprechenden Segmenten 11 a, 11 b, 11 c der oberen Rinne an und verhindern auf diese Weise, dass das flüssige Kühlmittel 7 durch die Öffnungen der Rinnensegmente 11 a, 11 b, 11 c abfließen kann. Die Segmente 11 d, 11 e und 11 f der oberen Rinne 11 bilden ebenfalls einen gemeinsamen Rinnenabschnitt, im Folgenden Trennabschnitt 15 genannt. Der Trennabschnitt 15 schließt sich unmittelbar an den Fixierabschnitt 13 an und ist stärker gegenüber der Horizontalen geneigt als dieser. Im Bereich des Trennabschnitts 15 sind die Segmente 12d und 12e der unteren Rinne 12 vertikal beabstandet von den entsprechenden Segmenten 11d, 11e, 11f der oberen Rinne 11 angeordnet, sodass das flüssige Kühlmittel 7 in diesem Bereich durch die Öffnungen der Rinnensegmente 11d, 11e, 11f hindurch über die Segmente 12d, 12e der unteren Rinne 12 in den Vorratsbehälter 4 hinein abfließen kann. Am (vom Zulauf des Kühlmittels 7 aus gesehen) hinteren Ende des letzten Rinnenabschnitts 11f der oberen Rinne ist ein Auffangbehälter 16 für erzeugte Pellets 17 angeordnet. Der Auffangbehälter 17 kann auch innerhalb des Gehäuses 3 angeordnet sein. Statt eines Auffangbehälters 17 kann auch eine Verpackungseinrichtung an dieser Stelle vorgesehen sein. Der Eintrag des zu pelletierenden Stoffs erfolgt mittels einer Eintragvorrichtung 19, die oberhalb der ersten Segmente 11 a, 11 b der oberen Rinne 11 angeordnet ist. Die Eintragvorrichtung 16 umfasst eine Düse oder eine Mehrzahl von Düsen, über die eine Abgabe des zu pelletierenden Stoffs in Form von Tropfen 18 ermöglicht wird. Eine Abluftgebläse 20 sorgt für die Absaugung des während des Pelletiervorgangs verdampften Kältemittels sowie von etwaig eindringender Umgebungsluft.

Beim Betrieb der Vorrichtung 1 wird flüssiges Kühlmittel 7 aus dem Vorratsbehälter 4 mittels der Fördereinrichtung 6 in den Fixierabschnitt 13 der Rinnenanordnung 10 gefördert und bildet dort einen laminaren Strom flüssigen Kühlmittels 7 aus. Aus der Eintragvorrichtung 19 wird der zu pelletierende Stoff in den Fixierabschnitt 13 und damit in den fließenden Kühlmittelstrom eingetropft und von diesem bis zum anderen Ende des Fixierabschnitts 13 transportiert. Die Länge des Fixierabschnitts 13 ist dabei so bemessen, dass das flüssige Kühlmittel 7 dem zu pelletierenden Stoff gerade so viel Energie entzieht, dass die äußere Hülle der Tropfen 18 angefroren, der Kern aber noch flüssig ist. Es bilden sich somit Pellets 17 mit fester Hülle. Bei diesem Vorgang verdampft ein Teil des flüssigen Kühlmittels. Anschließend gelangen die Pellets 17 in den Trennabschnitt 15, also in die die Segmente 11 d, 11 e, 11 f der oberen Rinne 11. Da die Pellets 17 im Trennabschnitt 15 nicht mehr vom Kühlmittelstrom mitbewegt werden, besitzt der Trennabschnitt 15 ein stärkeres Gefälle als der Fixierabschnitt 13. Dadurch wird der weitere Transport der Pellets unter der Wirkung des eigenen Gewichts gewährleistet und somit der Gefahr zu begegnet, dass einzelne Pellets 17 im Bereich des Trennabschnitts 15 hängen bleiben und an dieser festfrieren. Zusätzlich kann jedoch auch noch eine Einrichtung vorgesehen sein, die das Festfrieren unterbindet, beispielsweise ein Rüttelwerk 21, das zumindest die Segmente 11d, 11e, 11f des Trennabschnitts 15 in Vibrationen versetzt, oder ein Gebläse, das die Pellets mittels eines kalten Inertgasstroms von der Rinne trennt, wobei der kalte Inertgasstrom zugleich der weiteren Kühlung der Pellets 17 dient.

Das gesamte in der Anlage anfallende verdampfte Kühlmittel wird oberhalb der Rinnenanordnung von der Absaugeinrichtung 20 der Pellets angesaugt. Auf diese Weise sind die Pellets 17 auf dem Trennabschnitt 15 von einer kalten Atmosphäre umgeben, die dafür sorgt, dass die Pellets 17 weiter gekühlt werden. Das gasförmige Kühlmittel entzieht dabei beim Durchströmen dieser Wegstrecke den Pellets weiterhin Energie und erwärmt sich dabei. Bevorzugt ist die Absaugeinrichtung derart angeordnet, dass der kalte Gasstrom des verdampften Kühlmittels eine Richtung aufweist, die zumindest abschnittsweise eine Richtungskomponente parallel oder antiparallel zur Transportrichtung der Pellets 17 entlang der Rinnenanordnung 10 aufweist. Eine solche Parallelführung von kaltem Gasstrom und Pellets 17 kann auch-in der Zeichnung jedoch nicht gezeigt - durch Vorsehen eines Tunnels um den Trennabschnitt 15 herum erzwungen werden, durch den hindurch der Gasstrom abgezogen wird.

Die Länge und das Gefälle des Trennabschnitts 15 und ggf. die Strömungsverhältnisse des verdampfenden Kältemittelstromes sind so gewählt, dass die Pellets 17 am Ende des Trennabschnitts vollständig durchgefroren sind. Der Kühleffekt aufgrund des kalten Gasstroms kann noch dadurch verstärkt werden, dass der Trennabschnitt in einen tunnelartig ausgebildeten Bereich des Gehäuses 3 angeordnet wird. Die Leistung der Absaugeinrichtung ist so bemessen, dass im Innern des Gehäuses 3 ein leichter Überdruck gegenüber der Umgebung von beispielsweise 0,1 mbar bis 1 mbar aufrecht erhalten wird, um das Eindringen von feuchter Umgebungsluft zu verhindern. Die durchgefrorenen Pellets 17 fallen in den Auffangbehälter 16 oder werden (hier nicht gezeigt) einer Verpackungseinrichtung oder einer Einrichtung zur Weiterverarbeitung zugeleitet.

Die in Fig 2 gezeigte Vorrichtung 23 unterscheidet sich von der Vorrichtung 1 aus Fig. 1 lediglich in der Geometrie der Rinnenanordnung. Die Rinnenanordnung 24 der Vorrichtung 23 umfasst eine obere Rinne 25 und eine untere Rinne 26, die jeweils ebenfalls in Segmente unterteilbar sind. Während die obere Rinne 25 zumindest abschnittsweise für das flüssige Kühlmittel durchlässig ist, ist die untere Rinne 26 nach unten geschlossen und für das flüssige Kühlmittel undurchlässig. Die aus den Rinnen 25, 26 gebildete Rinnenanordnung ist spiralförmig um eine im Wesentlichen senkrechte Achse 27 angeordnet. Während die oberen Abschnitte der beiden Rinnen 25, 26 dicht aneinanderliegen, sodass sich insgesamt eine nach unten geschlossene Rinne ergibt, die einen Fixierabschnitt 28 der Rinnenanordnung 25, 26 bilden, sind die unteren Abschnitte vertikal beabstandet voneinander angeordnet und bilden einen Trennabschnitt 29. Im Betrieb der Vorrichtung 23 wird ein Stoff mittels einer Eintrageinrichtung 30 in den Fixierabschnitt 28 eingetropft, in dem mittels der Fördereinrichtung 33 ein laminarer Kühlmittelstrom aufrechterhalten wird. Die Stofftropfen werden im Fixierabschnitts 28 vom Kühlmittel umströmt und bilden Pellets mit einer gefrorenen, festen Hülle aus. Die angefrorenen Pellets werden im Trennabschnitt 29 weiterhin über die obere Rinne 25 zum Auffangbehälter 31 geleitet, während das flüssige Kühlmittel durch die Öffnungen der Rinne25 über die unteren Abschnitte der Rinne 26 in einen Vorratsbehälter 32 zurückgeführt wird aus dem die Fördereinrichtung 33 das Kühlmittel zur Versorgung der des Fixierabschnitts 28 schöpft. Die in Fig. 2 gezeigte Anordnung ist besonders kompakt und platzsparend.

In Fig.3 sind beispielhaft verschiedene Typen von Durchlassbereichen zur Trennung von Pellets und flüssigem Kühlmittel mit unterschiedlichen Öffnungen gezeigt, die zur besseren Veranschaulichung in einer einzigen Rinne 35 angeordnet sind. In der Praxis dürfte ein Trennabschnitt gemäß der Erfindung in der Regel jeweils nur einen Typ von Durchlassbereich aufweisen, wenngleich eine Kombination unterschiedlicher Typen von Durchlassbereichen nicht ausgeschlossen ist. Im in der Zeichnung oben dargestellten Teil der Rinne 35 ist ein Feld von runden, elliptischen oder ovalen Öffnungen 38 gezeigt, deren Durchmesser jeweils wesentlich geringer sein sollte als der durchschnittliche Durchmesser der in der Rinne 35 zu transportierenden Pellets 37. Ein derartiges Feld lässt sich einfach durch das Vorsehen entsprechend gelochter Bleche für die Unterseite 36 der Rinne 35 realisieren. Im mittleren Teil der Rinne 35 sind rillen- bzw. längsspaltförmige Öffnungen 39 gezeigt, die parallel zur Fließrichtung der Pellets angeordnet sind und den Pellets dadurch beim Transport einen besonders geringen Widerstand entgegensetzen. Im in der Zeichnung unten dargestellten Teil der Rinne 35 ist ein siebartiger Durchlassbereich 40 gezeigt. Die Durchlassbereiche können dabei auf der unteren Seite 36 einer Rinne 35 angeordnet sein oder auch in einer Seitenwand, wie beispielhaft anhand einer Öffnung 41 gezeigt.

Folgende Werte haben sich beispielsweise für eine Vorrichtung (Anlage) mit einer Kapazität von ca. 300 kg Pellets ergeben. Gefroren wird beispielsweise eine wässerige Suspension mit einem Feststoffanteil von 5 % zu Pellets von einem Durchmesser von ca. 6 mm. Als flüssiges Kühlmittel dient flüssiger Stickstoff. Die Strömungsgeschwindigkeit auf der Rinne 11 beträgt im Fixierabschnitt 13 dabei 0,5 Meter pro Sekunde. Die Rinne besitzt dabei eine Breite von 1 Meter und eine Länge von 3 Metern. Der Verbrauch an flüssigem Stickstoff beträgt 3,0 kg/kg Produkt (Pellets). Die Verweilzeit der auf dem Trennabschnitt hinab gleitenden Pellets beträgt vorzugsweise 30 Sekunden. Längere Verweilzeiten führen in der Regel zum gleichen Ergebnis. Die Kerntemperatur der Pellets am Ende des Trennbereiches beträgt -20 °C. Die Temperatur des Stickstoffgases (Abgas) im Bereich des Trennabschnitts beträgt ca.-185°C. Unmittelbar vor dem Abluftgebläse 20 beträgt die Temperatur des Stickstoffgases -40 °C.

### Bezugzeichenliste

- 1.: Vorrichtung
- 2.: -
- 3.: Gehäuse
- 4.: Vorratsbehälter
- 5.: Füllstand
- 6.: Fördereinrichtung
- 7.: verflüssigtes Kältemittel
- 8.: Förderstrecke
- 9.: -
- 10.: Rinnenanordnung
- 11.: obere Rinne - 11 a, 11 b, 11 c, 11 d, 11 e, 11 f: Segmente der oberen Rinne
- 12.: untere Rinne - 12a, 12b, 12c, 12d, 12e: Segmente der unteren Rinne
- 13.: Fixierabschnitt
- 14.: -
- 15.: Trennabschnitt
- 16.: Auffangbehälter
- 17.: Pellets
- 18.: Tropfen
- 19.: Eintrageinrichtung
- 20.: Abluftgebläse
- 21.: Rüttelwerk
- 22.: -
- 23.: Vorrichtung
- 24.: Rinnenanordnung
- 25.: obere Rinne
- 26.: untere Rinne
- 27.: Achse
- 28.: Fixierabschnitt
- 29.: Trennabschnitt
- 30.: Eintrageinrichtung
- 31.: Auffangbehälter
- 32.: Vorratsbehälter
- 33.: Fördereinrichtung
- 34.: -
- 35.: Rinne
- 36.: untere Seite
- 37.: Pellet
- 38.: Öffnung
- 39.: rillenförmige Öffnung
- 40.: siebartiger Durchlassbereich
- 41.: seitliche Öffnung

## Patentansprüche

1. Vorrichtung zum Pelletieren oder Granulieren eines flüssigen oder pastösen Stoffes mit einem flüssigen Kühlmittel (7), mit einer Fördereinrichtung (6, 33), mittels der das flüssige Kühlmittel (7) in eine zumindest abschnittsweise nach oben offene Rinnenanordnung (10, 24) transportiert wird, einer Eintragvorrichtung (19, 30), mittels der der zu pelletierende Stoff in die Rinnenanordnung (10, 24) eingetragen wird und einer Trenneinrichtung (15, 29) zum Trennen des pelletierten oder granulierten Stoffes vom Kühlmittel (7), sowie mit einer Auffangeinrichtung (16, 31) zum Auffangen der erzeugten Körner oder Pellets,
wobei die Rinnenanordnung (10, 24) einen nach unten geschlossenen rinnenförmigen Fixierabschnitt (13, 28) sowie einen sich an den Fixierabschnitt (13, 28) in Fließrichtung unmittelbar anschließenden rinnenförmigen Trennabschnitt (15, 29) umfasst, der unterseitig mit einem Durchlassbereich (38, 39, 40, 41) ausgerüstet ist, der für das flüssige Kühlmittel durchlässig, für den pelletierten oder granulierten Stoff jedoch undurchlässig ist,
**dadurch gekennzeichnet,**
**dass** die Rinnenanordnung (10, 24) eine zumindest abschnittsweise für das Kühlmittel (7) durchlässige erste Rinne (11, 25) sowie eine - geodätisch gesehen - unterhalb der ersten Rinne (11, 25) angeordnete, für das flüssige Kühlmittel (7) undurchlässige zweite Rinne (12, 26) umfasst, welche zweite Rinne (12, 26) zumindest abschnittsweise unter Ausbildung des Fixierabschnitts (13, 28) an der ersten Rinne anliegt und der Fixierabschnitt (13, 28) und/oder der Trennabschnitt (15, 29) jeweils aus mehreren, in ihrem Neigungswinkel gegenüber der Horizontalen einstellbaren Segmenten (11 a, 11b, 11c, 11d, 11e, 11f; 12a, 12b, 12c, 12d, 12e) aufgebaut ist/sind und dass die zweite Rinne (12, 26) aus beweglichen Segmente (12a, 12b, 12c, 12d, 12e) aufgebaut ist, die jeweils von einem ersten Zustand, in dem das Segment (12a, 12b, 12c, 12d, 12e) an der ersten Rinne (11, 25) flüssigkeitsdicht anliegt, in einen zweiten Zustand verbringbar sind, in dem das Segment (12a, 12b, 12c, 12d, 12e) beabstandet von der ersten Rinne (11, 25) angeordnet sind.

2. Vorrichtung nach Anspruch 1, **dadurch gekennzeichnet, dass** die erste Rinne (11, 25) und die zweite Rinne (12, 26) axial zueinander verschiebbar angeordnet sind.

3. Vorrichtung nach Anspruch 1 oder 2, **dadurch gekennzeichnet, dass** der Trennabschnitt (15, 29) zur Gewährleistung der Durchlässigkeit für das Kühlmittel zumindest einen gitter-, rillen- oder siebförmigen Durchlassbereich (39, 40, 41) aufweist.

4. Vorrichtung nach einem der vorhergehenden Ansprüche, **dadurch gekennzeichnet, dass** der Trennabschnitt (15, 29) zur Gewährleistung der Durchlässigkeit für das Kühlmittel einen als Lochblech ausgebildeten Durchlassbereich (38) aufweist.

5. Vorrichtung nach einem der vorhergehenden Ansprüche, **dadurch gekennzeichnet, dass** die Rinnenanordnung (24) als eine sich um eine im Wesentlichen vertikale Achse (27) windende Spirale ausgebildet ist.

6. Vorrichtung nach einem der vorhergehenden Ansprüche, **dadurch gekennzeichnet, dass** die Rinnenanordnung (10, 24) in einem thermisch isolierten Gehäuse (3) eingehaust ist.

7. Vorrichtung nach einem der vorhergehenden Ansprüche, **dadurch gekennzeichnet, dass** zumindest der Trennabschnitt (15, 26) der Rinnenanordnung (10, 24) mit einer Einrichtung (21) zum Ablösen von an der Rinnenanordnung (10, 24) festfrierenden Pellets ausgerüstet ist.

8. Vorrichtung nach einem der vorhergehenden Ansprüche, **dadurch gekennzeichnet, dass** als Fördereinrichtung (6, 33) eine Pumpe, ein Becherwerk, eine archimedische Schraube oder eine Kombination davon vorgesehen ist.

9. Verfahren zum Pelletieren oder Granulieren eines flüssigen oder pastösen Stoffes, in einer Vorrichtung nach einem der vorgehenden Ansprüche, bei dem ein flüssiges Kühlmittel (7) mit einer Fördereinrichtung (6, 33), in eine nach oben offene Rinnenanordnung (10, 24) transportiert wird, ein zu pelletierender Stoff in die Rinnenanordnung (10, 24) eingetragen wird und anschließend in einer Trenneinrichtung (15, 29) der pelletierte oder granulierte Stoffes vom Kühlmittel (7) getrennt wird,
wobei der zu pelletierende Stoff in der Rinnenanordnung (10, 24) im Strom des Kühlmittels (7) einen nach unten geschlossenen rinnenförmigen Fixierabschnitt (13, 28) durchläuft und dabei durch Wärmekontakt mit dem Kühlmittel (7) zu Pellets oder Körnern gefriert und die Pellets oder Körner anschließend einem in Fließrichtung abwärts verlaufenden, rinnenförmigen Trennabschnitt (15, 29) zugeführt werden, der unterseitig mit einem Durchlassbereich (38, 39, 40, 41) ausgerüstet ist, wobei das Kühlmittel durch den Durchlassbereich (38, 39, 40, 41) hindurch abfließt, die Pellets oder Körner dagegen unter der Wirkung der Schwerkraft den rinnenförmigen Trennabschnitt (15, 29) durchlaufen und in einer Auffangeinrichtung (16) aufgefangen werden,
**dadurch gekennzeichnet,**
**dass** die Länge und die Neigung des Fixierabschnitts (13, 28) und/oder des Trennabschnitts (15, 29) gegenüber der Horizontalen in Abhängigkeit von Parametern des zu pelletierenden Stoffs eingestellt werden.

## Claims

1. Device for pelletizing or granulating a liquid or pasty material using a liquid coolant (7), having a conveying installation (6, 33) by means of which the liquid coolant (7) is transported into a channel arrangement (10, 24) which at least in portions is open towards the top, an infeed device (19, 30) by means of which the material to be pelletized is infed into the channel arrangement 10, 24), and a separating installation (15, 29) for separating the material to be pelletized or granulated from the coolant (7), and having a collection installation (16, 31) for collecting
the granules or pellets produced,
wherein the channel arrangement (10, 24) comprises a fixing portion (13, 28) which is closed towards the bottom, and a channel-shaped separating portion (15, 29) which in the direction of flow immediately adjoins the fixing portion (13, 28) and which on the lower side is equipped with a passage region (38, 39, 40, 41) which is permeable to the liquid coolant but is impermeable to the pelletized or granulated material,
**characterized in**
**that** the channel arrangement (10, 24) comprises a first channel (11, 25) which at least in portions is permeable to the coolant (7), and a second channel (12, 26) which when viewed in a geodetic manner is disposed below the first channel (11, 25) and is impermeable to the liquid coolant (7), which second channel (12, 26) at least in portions and while configuring the fixing portion (13, 26) bears on the first channel, and the fixing portion (13, 28) and/or the separating portion (15, 29) in each case are/is constructed from a plurality of segments (11a, 11b, 11c, 11d, 11e, 11f; 12a, 12b, 12c, 12d, 12e) which in terms of their angle of inclination in relation to the horizontal are adjustable, and in that the second channel (12, 26) is constructed from movable segments (12a, 12b, 12c, 12d, 12e) which are in each case transformable from a first state in which the segment (12a, 12b, 12c, 12d, 12e) bears in a liquid-tight manner on the first channel (11, 25) to a second state in which the segment (12a, 12b, 12c, 12d, 12e) is disposed so as to be spaced apart from the first channel (11, 25).

2. Device according to Claim 1, **characterized in that** the first channel (11, 25) and the second channel (12, 26) are disposed so as to be axially displaceable in relation to one another.

3. Device according to Claim 1 or 2, **characterized in that** the separating portion (15, 29) for guaranteeing permeability to the coolant has at least one grill-shaped, groove-shaped, or sieve-shaped passage region (39, 40, 41).

4. Device according to one of the preceding claims,
**characterized in that** the separating portion (15, 29) for guaranteeing permeability to the coolant has a passage region (38) which is configured as a perforated plate.

5. Device according to one of the preceding claims,
**characterized in that** the channel arrangement (24) is configured as a helix which rotates about a substantially vertical axis (27).

6. Device according to one of the preceding claims,
**characterized in that** the channel arrangement (10, 24) is encapsulated in a thermally insulated housing (3).

7. Device according to one of the preceding claims,
**characterized in that** at least the separating portion (15, 26) of the channel arrangement (10, 24) is equipped with an installation (21) for peeling away pellets that are frozen to the channel arrangement (10, 24).

8. Device according to one of the preceding claims,
**characterized in that** a pump, a bucket elevator, an Archimedes' screw, or a combination thereof is provided as a conveying installation (6, 33).

9. Method for pelletizing or granulating a liquid or pasty material in a device according to one of the preceding claims, in which a liquid coolant (7) by way of a conveying installation (6, 33) is transported into a channel arrangement (10, 24) which is open towards the top, a material to be pelletized is infed in to the channel arrangement (10, 24), and the pelletized or granulated material is subsequently separated from the coolant (7) in a separating installation (15, 29), wherein the material to be pelletized in the channel arrangement (10, 24) in the stream of coolant (7) passes a channel-shaped fixing portion (13, 28) which is closed towards the bottom and thereby by way of thermal contact with the coolant (7) is frozen to form granules or pellets, and the pellets or granules are subsequently supplied to a channel-shaped separating portion (15, 29) which in the direction of flow runs downwards and which on the lower side is equipped with a passage region (38, 39, 40, 41), wherein the coolant runs off through the passage region (38, 39, 40, 41), the pellets or granules, by contrast, by way of gravity pass through the channel-shaped separating portion (15, 29) and are collected in a collection installation (16),
**characterized in**
**that** the length and the inclination of the fixing portion (13, 28) and/or of the separating portion (15, 29) in relation to the horizontal are adjusted depending on the parameters of the material to be pelletized.

## Revendications

1. Dispositif de pelletisation ou de granulation d'une matière liquide ou pâteuse avec un agent de refroidissement fluide (7), avec un dispositif de transport (6, 33) au moyen duquel l'agent de refroidissement fluide (7) est transporté dans un agencement de rigole au moins en partie ouvert vers le haut (10, 24), un dispositif d'introduction (19, 30) au moyen duquel la matière à pelletiser est introduite dans l'agencement de rigole (10, 24) et un dispositif de séparation (15, 29) pour séparer la matière pelletisée ou granulée de l'agent de refroidissement (7), et avec un dispositif de réception (16, 31) pour recevoir les grains ou les granulés produits, l'agencement de rigole (10, 24) comprenant une portion de fixation en forme de rigole fermée vers le bas (13, 28) ainsi qu'une portion de séparation en forme de rigole (15, 29) se raccordant directement à la portion de fixation (13, 28) dans la direction d'écoulement, laquelle est équipée du côté inférieur d'une région de passage (38, 39, 40, 41) qui laisse passer l'agent de refroidissement fluide mais ne laisse pas passer la matière pelletisée ou granulée,
**caractérisé en ce que** l'agencement de rigole (10, 24) comprend une première rigole (11, 25) laissant au moins en partie passer l'agent de refroidissement (7) ainsi qu'une deuxième rigole (12, 26) disposée - du point de vue géodésique - en dessous de la première rigole (11, 25) et ne laissant pas passer l'agent de refroidissement fluide (7), laquelle deuxième rigole (12, 26) s'applique au moins en partie contre la première rigole en créant la portion de fixation (13, 28) et la portion de fixation (13, 28) et/ou la portion de séparation (15, 29) étant constituée(s) à chaque fois de plusieurs segments (11a, 11b, 11c, 11d, 11e, 11f ; 12a, 12b, 12c, 12d, 12e) dont l'angle d'inclinaison par rapport à l'horizontale peut être ajusté et **en ce que** la deuxième rigole (12, 26) est constituée de segments mobiles (12a, 12b, 12c, 12d, 12e) qui peuvent être amenés à chaque fois d'un premier état dans lequel le segment (12a, 12b, 12c, 12d, 12e) s'applique de manière étanche aux liquides contre la première rigole (11, 25), dans un deuxième état dans lequel le segment (12a, 12b, 12c, 12d, 12e) est disposé à distance de la première rigole (11, 25).

2. Dispositif selon la revendication 1, **caractérisé en ce que** la première rigole (11, 25) et la deuxième rigole (12, 26) sont disposées de manière déplaçable axialement l'une par rapport à l'autre.

3. Dispositif selon la revendication 1 ou 2,
**caractérisé en ce que** la portion de séparation (15, 29) présente, pour garantir la perméabilité à l'agent de refroidissement, au moins une région de passage en forme de grille, de rainures ou de tamis (39, 40, 41).

4. Dispositif selon l'une quelconque des revendications précédentes, **caractérisé en ce que** la portion de séparation (15, 29) présente, pour garantir la perméabilité à l'agent de refroidissement, une région de passage réalisée sous forme de tôle perforée (38).

5. Dispositif selon l'une quelconque des revendications précédentes, **caractérisé en ce que** l'agencement de rigole (24) est réalisé sous forme de spirale s'enroulant autour d'un axe essentiellement vertical (27).

6. Dispositif selon l'une quelconque des revendications précédentes, **caractérisé en ce que** l'agencement de rigole (10, 24) est logé dans un boîtier thermiquement isolé (3).

7. Dispositif selon l'une quelconque des revendications précédentes, **caractérisé en ce qu'**au moins la portion de séparation (15, 26) de l'agencement de rigole (10, 24) est munie d'un dispositif (21) pour décoller les granulés congelés fixement contre l'agencement de rigole (10, 24).

8. Dispositif selon l'une quelconque des revendications précédentes, **caractérisé en ce que** l'on prévoit en tant que dispositif de transport (6, 33), une pompe, un mécanisme à godets, une vis d'Archimède ou une combinaison de ceux-ci.

9. Procédé de pelletisation ou de granulation d'une matière liquide ou pâteuse dans un dispositif selon l'une quelconque des revendications précédentes, dans lequel un agent de refroidissement fluide (7), avec un dispositif de transport (6, 33) est transporté dans un agencement de rigole ouvert vers le haut (10, 24), une matière à pelletiser est introduite dans l'agencement de rigole (10, 24) et la matière pelletisée ou granulée est ensuite séparée de l'agent de refroidissement (7) dans un dispositif de séparation (15, 29),
la matière à pelletiser, dans l'agencement de rigole (10, 24) dans le courant d'agent de refroidissement (7), traversant une portion de fixation (13, 28) en forme de rigole fermée vers le bas et en l'occurrence, par contact thermique avec l'agent de refroidissement (7), étant congelée pour former des grains ou des granulés et les granulés ou les grains étant ensuite acheminés à une portion de séparation en forme de rigole (15, 29) s'étendant vers le bas dans la direction d'écoulement, qui est munie du côté inférieur d'une région de passage (38, 39, 40, 41), l'agent de refroidissement s'écoulant à travers la région de passage (38, 39, 40, 41), et les grains ou les granulés, par contre, s'écoulant à travers la portion de séparation en forme de rigole (15, 29) sous l'effet de la force de gravité et étant reçus dans un dispositif de réception (16),
**caractérisé en ce que**
la longueur et l'inclinaison de la portion de fixation (13, 28) et/ou de la portion de séparation (15, 29) sont ajustées par rapport à l'horizontale en fonction de paramètres de la matière à pelletiser.
